# EUROPEAN PATENT APPLICATION

(11) **EP 4 772 391 A1**
(43) Date of publication of application: **08.07.2026**
(21) Application number: 25761146.7
(22) Date of filing: 28.02.2025
(51) Int. Cl.: B60N 2/07

(54) **HIGH-STRENGTH FULLY ENCLOSED DUSTPROOF STRUCTURE FOR AUTOMOTIVE SEAT SLIDE RAILS**

(30) Priority: 28.02.2024 CN 202410222784
(71) Applicant: Shanghai Halong Science and Technology Co., Ltd., Shanghai 201700 (CN)
(72) Inventor: ZHENG, Xiaoyuan, Shanghai 201700 (CN)
(74) Representative: Acapo Onsagers AS
(86) International application number: PCT/CN2025/079966
(87) International publication number: WO 2025/180512

(57) **Abstract**

A high-strength fully enclosed dustproof structure for automotive seat slide rails, comprising seat slide rails (1) and seat slider connectors (2) sliding along the seat slide rails, wherein each seat slide rail is formed therein with a slide groove (3) in which the corresponding seat slider connector slides, a mounting groove (4) is formed in one side wall of the slide groove, and a rotating shaft (5) is fixedly arranged in the mounting groove in the extension direction of the seat slide rail; a dust shield assembly (6) is rotatably arranged on each rotating shaft in the extension direction of each seat slide rail, a shifting plate (7) is arranged on the side of each seat slider connector close to the rotating shaft, and the seat slider connector is used for driving the corresponding shifting plate to flip and unfold the adjacent dust shield; a support seat (8) is arranged on the side of each slide groove away from the corresponding mounting groove, and a return structure (9) is arranged between each dust shield assembly and the corresponding rotating shaft. According to the dustproof structure, the dustproof effect of a seat slide rail is improved, and the problem that female passengers wearing high heels are prone to stepping into a gap and getting stuck in a cavity of a track is avoided.

## Description

### TECHNICAL FIELD

The present disclosure relates to the field of automotive seat slide rails, and in particular, to a high-strength fully enclosed dustproof structure for automotive seat slide rails.

### BACKGROUND

During the use of an existing commercial vehicle, a seat can usually be adjusted in a vehicle compartment. However, because an upper surface of a seat slide rail should be flush with an inner bottom of the vehicle compartment in a mounting process, dust in the vehicle compartment easily enters a cavity of a track where the slide rail is located, thereby affecting the operation of a lead screw.

Therefore, a seat slide rail of a commercial vehicle usually is a dustproof slide rail. At present, the dustproof slide rail is usually sealed and dustproof in such a manner that rubber strips are engaged with each other at an opening of a track.

In an actual use process, a dustproof mode of the slide rail described above has achieved a dustproof effect to a certain extent, but when heavy impurities fall on rubber strips of the slide rail, a gap may occur between the rubber strips engaged with each other, and then other impurities may always fall into the slide rail from the gap, thereby affecting the operation of the slide rail. Moreover, if some female passengers wear high heels, because strength of the rubber strips is not enough, the female passengers are prone to stepping into the gap and getting stuck in a cavity of the track, thereby leading to ankle sprain accidents.

### SUMMARY

An objective of the present disclosure is to provide a high-strength fully enclosed dustproof structure for automotive seat slide rails, thereby solving problems existing in the prior art, effectively improving strength of the dustproof structure of the slide rail, and ensuring dustproof performance of the slide rail.

In order to achieve the above objective, the present disclosure provides the following solution.

A high-strength fully enclosed dustproof structure for automotive seat slide rails is provided, including a seat slide rail 1 and a seat slider connector 2 sliding along the seat slide rail 1, where a slide groove 3 in which the seat slider connector 2 slides is arranged in the seat slide rail 1, a mounting groove 4 is arranged on one side wall of the slide groove 3, a rotating shaft 5 distributed in an extending direction of the seat slide rail 1 is fixed in the mounting groove 4, a dust shield assembly 6 distributed in the extending direction of the seat slide rail 1 is rotatably arranged on the rotating shaft 5, the dust shield assembly 6 is formed by a plurality of dust shields engaged with each other, a shifting plate 7 is arranged on one side that is of the seat slider connector 2 and that is close to the rotating shaft 5, and the seat slider connector 2 is capable of driving the shifting plate 7 to flip and unfold an adjacent dust shield during sliding; and a support seat 8 is arranged on one side that is of the slide groove 3 and that is away from the mounting groove 4, a return structure 9 is arranged between the dust shield assembly 6 and the rotating shaft 5, the return structure 9 is used for driving a corresponding dust shield to return after the shifting plate 7 has moved away, and the support seat 8 is used for supporting the dust shield.

As an embodiment, the dust shield assembly 6 includes a first dust shield 61 and a second dust shield 62 which are engaged with each other, the first dust shield 61 is an N-shaped dust shield, both sides of the second dust shield 62 are provided with U-shaped grooves, and ends of two first dust shields 61 adjacent to the second dust shield 62 are engaged in the U-shaped grooves on both sides of the second dust shield 62, respectively; and after the U-shaped groove and a port of the first dust shield 61 are engaged with each other, a flow guide chamber 63 is formed.

As an embodiment, a buffer structure 10 is arranged on the support seat 8, and the buffer structure 10 is used for buffering the dust shield assembly 6 when the dust shield assembly returns.

As an embodiment, the buffer structure 10 includes a buffer groove 101 arranged on the support seat 8, and a buffer pad 102 is fixedly arranged in the buffer groove 101.

As an embodiment, a collecting groove 103 is arranged on one side that is of the buffer pad 102 and that is away from the mounting groove 4, the collecting groove 103 corresponds in position to the flow guide chamber 63 in the dust shield assembly 6 in a supporting state, and the collecting groove 103 is used for collecting impurities flowing out of the flow guide chamber 63.

As an embodiment, the return structure 9 includes a torsion spring 91 arranged between each dust shield in the dust shield assembly 6 and the rotating shaft 5, the torsion spring 91 is arranged on the rotating shaft 5, and one end of the torsion spring 91 is connected to a corresponding dust shield; and the torsion spring 91 is used for returning the dust shield in the dust shield assembly 6 to the state in which the dust shield abuts against the support seat 8.

As an embodiment, both ends of the shifting plate 7 are provided with guide structures 11, and the guide structures 11 are used for guiding the dust shield in the dust shield assembly 6 to unfold and return.

As an embodiment, each of the guide structures 11 includes a guide plate 111 arranged at one end of the shifting plate 7 and a guide surface 112 arranged on the guide plate 111; and the guide surface 112 is located at a top of the guide plate 111, the guide surface 112 is inclined from top to bottom in a sliding direction of the guide plate 111, and the guide surface 112 is used for abutting against an inner surface of the dust shield in the dust shield assembly 6.

As an embodiment, all bent portions on the guide surface 112 are connected by cambered surface transitions.

Compared with the prior art, the present disclosure has the following technical effects.

In the present disclosure, the dust shield in the dust shield assembly is supported by the support seat in a normal state, so that strength of the dustproof structure of the seat slide rail is improved while ensuring dustproof performance of the seat slide rail, and a problem that a gap occurs between the seat slide rails is avoided. At the same time, a form in which the shifting plate cooperates with the return structure is used. When the slider moves, the shifting plate flips and unfolds the dust shield adjacent to the slider. When the slider moves away, the dust shield returns under the action of the return structure and is supported by the support seat, thereby having no influence on normal movement of the seat while preventing dust.

Compared with the prior art, other technical solutions in the present disclosure also have the following technical effects.
1. Using a mode in which the first dust shield and the second dust shield which are adjacent are engaged with each other, in a process of moving the seat slider connector, the first dust shield and the second dust shield which are adjacent in the dust shield assembly move synchronously, thereby effectively increasing overall stability of the dust shield assembly. At the same time, a mode in which the adjacent dust shields are engaged with each other is used, thereby effectively preventing dust and impurities from entering from a gap between two steel plates. Even if dust and liquid enter from the gap, the dust and liquid may stay in the flow guide chamber, thereby preventing impurities from entering the seat slide rail, and effectively improving an overall use effect and a service life of the device.
2. The buffer structure can provide a certain amount of buffering to the dust shield when the dust shield returns, thereby reducing the noise generated when the dust shield returns, and effectively preventing the dust shield from being damaged when the dust shield returns.
3. The guide surface is used, thereby slowing down the speed of the dust shield when the dust shield returns, and then reducing the noise generated when the dust shield returns on the one hand; and facilitating the dust shield to unfold along the guide surface, and then facilitating movement of the seat slider connector on the other hand.

### BRIEF DESCRIPTION OF THE DRAWINGS

In order to explain the technical solution in the embodiments of the present disclosure or the prior art more clearly, the drawings needed in the embodiments will be briefly introduced hereinafter. Obviously, the drawings in the following description are only some embodiments of the present disclosure. For those skilled in the art, other drawings can be obtained according to these drawings without paying creative labor.
FIG. 1 is an isometric schematic diagram of a high-strength fully enclosed dustproof structure for automotive seat slide rails according to an embodiment of the present disclosure;
FIG. 2 is a schematic diagram of a first perspective of a high-strength fully enclosed dustproof structure for automotive seat slide rails according to an embodiment of the present disclosure;
FIG. 3 is a schematic diagram of a second perspective of a high-strength fully enclosed dustproof structure for automotive seat slide rails according to an embodiment of the present disclosure;
FIG. 4 is an enlarged schematic diagram at part A in FIG. 2;
FIG. 5 is an enlarged schematic diagram at part B in FIG. 3;
FIG. 6 is a schematic diagram of a third perspective of a high-strength fully enclosed dustproof structure for automotive seat slide rails according to an embodiment of the present disclosure; and
FIG. 7 is an enlarged schematic diagram at part C in FIG. 6.

### Description of reference numerals:

1. Seat slide rail; 2. Seat slider connector; 3. Slide groove; 4. Mounting groove; 5. Rotating shaft; 6. Dust shield assembly; 61. First dust shield; 62. Second dust shield; 63. Flow guide chamber; 7. Shifting plate; 8. Support seat; 9. Return structure; 91. Torsion spring; 10. Buffer structure; 101. Buffer groove; 102. Buffer pad; 103. Collecting groove; 11. Guide structure; 111. Guide plate; 112. Guide surface.

### DETAILED DESCRIPTION OF THE EMBODIMENTS

In the following, the technical solution in the embodiment of the present disclosure will be clearly and completely described with reference to the drawings. Obviously, the described embodiments are only some of the embodiments of the present disclosure, rather than all of the embodiments. Based on the embodiments in the present disclosure, all other embodiments obtained by those skilled in the art without paying creative labor belong to the scope of protection of the present disclosure.

An objective of the present disclosure is to provide a high-strength fully enclosed dustproof structure for automotive seat slide rails, thereby solving problems existing in the prior art, effectively improving strength of the dustproof structure of the slide rail, and ensuring dustproof performance of the slide rail.

In order to make the above objective, features and advantages of the present disclosure more obvious and understandable, the present disclosure will be further described in detail with reference to the drawings and the detailed description.

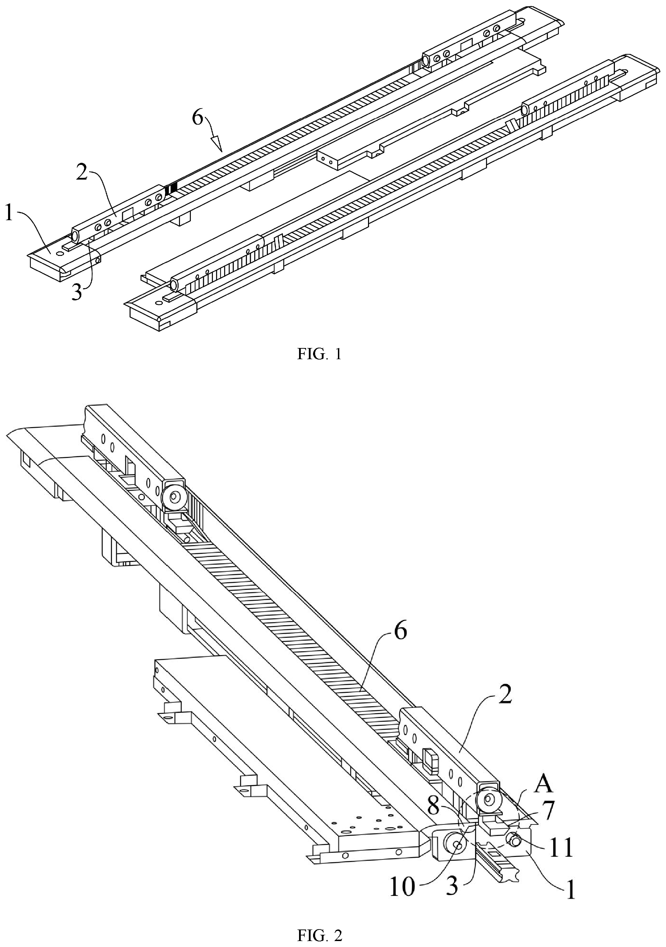

As shown in FIG. 1 to FIG. 7, a high-strength fully enclosed dustproof structure for automotive seat slide rails in this embodiment includes two seat slide rails 1 that are arranged oppositely. Each of the seat slide rails 1 is provided with a slide groove 3, and each of the seat slide rails 1 is provided with a seat slider connector 2 sliding along the slide groove 3. A mounting groove 4 is arranged on one side wall of the slide groove 3. A rotating shaft 5 is fixedly arranged in the mounting groove 4 in the extension direction of the seat slide rail 1. A dust shield assembly 6 is rotatably arranged on the rotating shaft 5 in the extending direction of the seat slide rail 1. A support seat 8 is arranged on one side that is of the slide groove 3 and that is away from the mounting groove 4. The support seat 8 is used for supporting the dust shield assembly 6 in a horizontal position. A shifting plate 7 is arranged on one side that is of the seat slider connector 2 and that is close to the rotating shaft 5. The seat slider connector 2 is used for driving the shifting plate 7 to flip and unfold an adjacent dust shield. A return structure 9 is arranged between the dust shield assembly 6 and the rotating shaft 5. The return structure 9 is used for driving a corresponding dust shield to return after the shifting plate 7 has moved away, and is supported by the support seat 8.

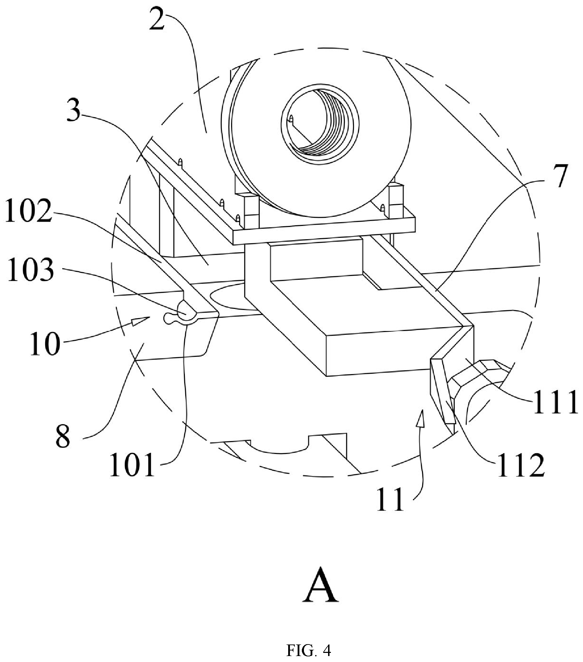

Referring to FIG. 2 and FIG. 4, a buffer structure 10 is arranged on the support seat 8, and the buffer structure 10 is used for buffering the dust shield assembly 6 when the dust shield assembly returns. The buffer structure 10 can provide a certain amount of buffering to the dust shield when the dust shield returns, thereby reducing the noise generated when the dust shield returns, and effectively preventing the dust shield from being damaged when the dust shield returns.

Specifically, the buffer structure 10 includes a buffer groove 101 arranged on the support seat 8, and a buffer pad 102 is fixedly arranged in the buffer groove 101. In this embodiment, the buffer pad 102 may be a flexible rubber pad, thereby effectively reducing the noise when the dust shield returns.

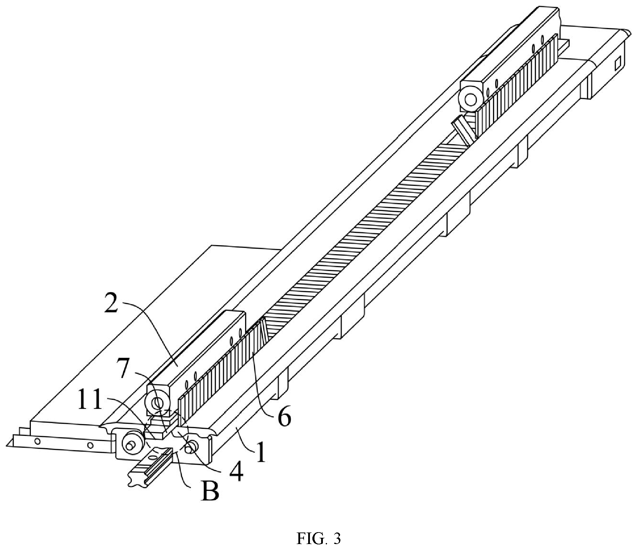

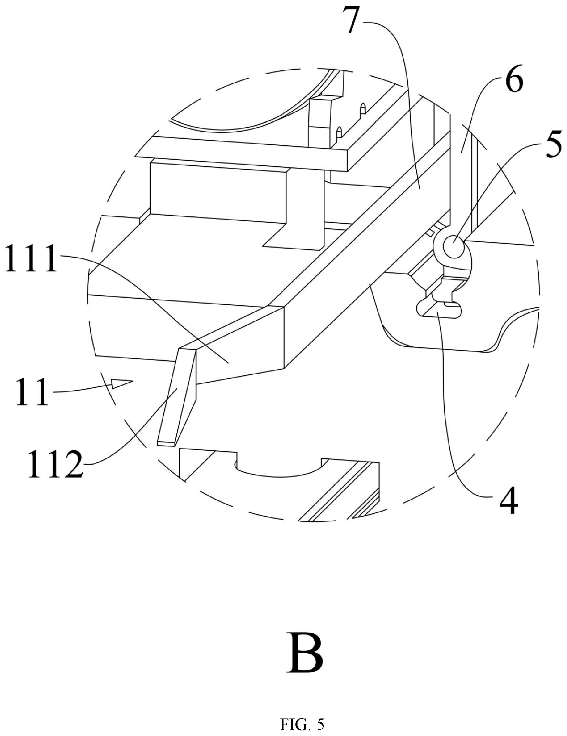

Referring to FIG. 3 and FIG. 5, both ends of the shifting plate 7 are provided with guide structures 11, and the guide structures 11 are used for guiding the dust shield in the dust shield assembly 6 to unfold and return. The guide structure 11 located at a front end of the seat slider connector 2 is used for unfolding the dust shield when moving. The guide structure 11 located at a rear end of the seat slider connector 2 is used for preventing the dust shield from quickly returning and preventing the dust shield from generating large noise under the action of the return structure 9. Both the front end and the rear end are based on a moving direction of the seat slider connector 2.

Specifically, each of the guide structures 11 includes a guide plate 111 arranged at one end of the shifting plate 7 and a guide surface 112 arranged on the guide plate 111. The guide surface 112 is arranged at a top of the guide plate 111. The guide surface 112 is inclined from top to bottom, and the guide surface 112 abuts against an inner surface of the dust shield in the dust shield assembly 6. In this embodiment, all bent portions on the guide surface 112 are connected by cambered surface transitions. Connection of the cambered surface allows the relative displacement between the dust shield and the guide plate 111 to be more gradual, thereby effectively increasing the overall life of the device.

The guide surface 112 can slow down the speed of the dust shield when the dust shield returns, and then reduce the noise generated when the dust shield returns on the one hand; and facilitate the dust shield to unfold along the guide surface 112, and then facilitate movement of the seat slider connector 2 on the other hand.

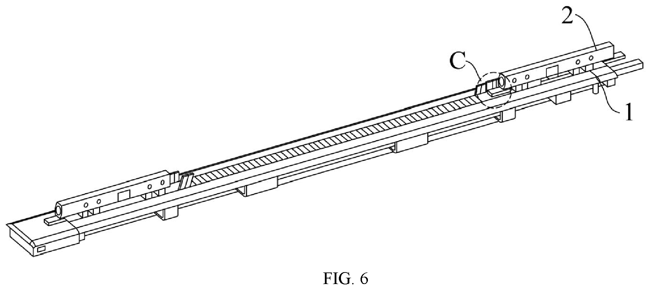

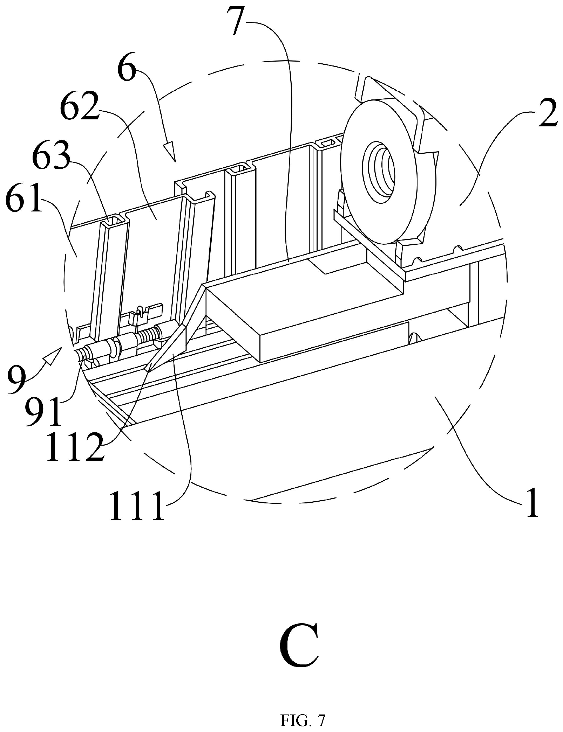

Referring to FIG. 6 and FIG. 7, the return structure 9 includes a torsion spring 91 arranged between each dust shield in the dust shield assembly 6 and the rotating shaft 5. The torsion spring 91 is arranged on the rotating shaft 5, and one end of the torsion spring 91 is connected to a corresponding dust shield. The torsion spring 91 is used for returning the dust shield in the dust shield assembly 6 to a horizontal position, and the dust shield slightly inclines downward. When the torsion spring 91 is used to rotate, the torsion spring 91 applies a small force to rotate the dust shield, thereby facilitating the rotation and having the returning performance.

Referring to FIG. 7, the dust shield assembly 6 includes a plurality of first dust shields 61 and second dust shields 62 which are engaged with each other. The first dust shield 61 is an N-shaped dust shield. The first dust shield 61 includes a plate body. Both ends of the plate body are provided with extensions perpendicular to the plate body and extending toward the second dust shield 62. Both sides of the second dust shield 62 are provided with U-shaped grooves, and two first dust shields 61 adjacent to the second dust shield 62 are engaged in the U-shaped grooves on both sides of the second dust shield 62, respectively. A flow guide chamber 63 is formed between the first dust shield 61 and the second dust shield 62. Using a mode in which the first dust shield 61 and the second dust shield 62 which are adjacent are engaged with each other, in a process of moving the seat slider connector 2, the second dust shield 62 in the dust shield assembly 6 can drive the adjacent first dust shield 61 to move synchronously, thereby effectively increasing overall stability of the dust shield assembly 6. At the same time, a mode in which the first dust shield 61 and the second dust shield 62 which are adjacent are engaged with each other is used, thereby effectively preventing dust and impurities from entering from a gap between the first dust shield and the second dust shield. Even if dust and liquid enter from the gap, the dust and liquid may stay in the flow guide chamber 63, thereby preventing impurities from entering the seat slide rail 1, and effectively improving an overall service life of the device.

It should also be noted that a collecting groove 103 may be arranged on one side that is of the buffer pad 102 and that is away from the mounting groove 4. The collecting groove 103 cooperates with the flow guide chamber 63. The collecting groove 103 facilitates collecting impurities located in the flow guide chamber 63 into the collecting groove 103, thereby facilitating subsequent cleaning.

It should also be noted that the dust shield 6 may be arranged horizontally. However, in order to allow the collecting groove 103 to cooperate with the flow guide chamber 63, a height of a support surface of the support seat 8 for the dust shield assembly 6 is slightly lower than a height of a lower surface of the dust shield assembly 6 close to the rotating shaft 5, so that the dust shield in the dust shield assembly 6 is slightly inclined downward and abuts against the buffer pad 102 when the dust shield returns. In this way, impurities in the flow guide chamber 63 can slide into the collecting groove 103 under the action of gravity. Moreover, the support seat 8 is located above the dust shield and is bent towards the dust shield, thereby effectively avoiding a gap between the support seat 8 and the dust shield assembly 6.

In this embodiment, an implementation principle of a high-strength fully enclosed dustproof structure for automotive seat slide rails is as follows. When a seat needs to be adjusted, the seat slider connector 2 is driven to move along the slide groove 3. The seat slider connector 2 drives the shifting plate 7 to move. The guide plate 111 that is on the shifting plate 7 and that is located in front of the moving direction interferes with the dust shield in front of the moving direction, so that the dust shield is lifted and unfolded along the guide surface 112 to ensure the normal movement of the seat slider connector 2. The dust shield has a tendency to be closed under the returning action of the torsion spring 91. After the seat slider connector 2 passes through the unfolded dust shield, the dust shield is gradually closed along the guide surface 112 on the guide plate 111 behind the moving direction, so that the guide plate 111 that is of the shifting plate 7 and that is located behind the moving direction can effectively slow down the speed of the dust shield when the dust shield returns due to the torsion spring 91. In this way, the dust shield slowly abuts against the buffer pad 102, thereby effectively slowing down the noise. At the same time, the cooperation between the flow guide chamber 63 and the collecting groove 103 can effectively prevent dust or impurities from directly entering the seat slide rail 1.

All adaptive changes which are made according to actual needs are within the scope of protection of the present disclosure.

In the present disclosure, specific examples are used to explain the principle and the implementation of the present disclosure. The description of the above embodiments is only used to help understand the method and the core idea of the present disclosure. At the same time, for those skilled in the art, according to the idea of the present disclosure, there may be changes in the specific implementation and the application scope. In summary, the contents of this specification should not be construed as limiting the present disclosure.

## Claims

1. A high-strength fully enclosed dustproof structure for automotive seat slide rails, comprising a seat slide rail (1) and a seat slider connector (2) sliding along the seat slide rail (1), wherein a slide groove (3) in which the seat slider connector (2) slides is arranged in the seat slide rail (1), a mounting groove (4) is arranged on one side wall of the slide groove (3), a rotating shaft (5) distributed in an extending direction of the seat slide rail (1) is fixed in the mounting groove (4), a dust shield assembly (6) distributed in the extending direction of the seat slide rail (1) is rotatably arranged on the rotating shaft (5), the dust shield assembly (6) is formed by a plurality of dust shields engaged with each other, a shifting plate (7) is arranged on one side that is of the seat slider connector (2) and that is close to the rotating shaft (5), and the seat slider connector (2) is capable of driving the shifting plate (7) to flip and unfold an adjacent dust shield during sliding; and
a support seat (8) is arranged on one side that is of the slide groove (3) and that is away from the mounting groove (4), a return structure (9) is arranged between the dust shield assembly (6) and the rotating shaft (5), the return structure (9) is used for driving a corresponding dust shield to return after the shifting plate (7) has moved away, and the support seat (8) is used for supporting the dust shield.

2. The high-strength fully enclosed dustproof structure for automotive seat slide rails according to claim 1, wherein the dust shield assembly (6) comprises a first dust shield (61) and a second dust shield (62) which are engaged with each other, the first dust shield (61) is an N-shaped dust shield, both sides of the second dust shield (62) are provided with U-shaped grooves, and ends of two first dust shields (61) adjacent to the second dust shield (62) are engaged in the U-shaped grooves on both sides of the second dust shield (62), respectively; and
after the U-shaped groove and a port of the first dust shield (61) are engaged with each other, a flow guide chamber (63) is formed.

3. The high-strength fully enclosed dustproof structure for automotive seat slide rails according to claim 2, wherein a buffer structure (10) is arranged on the support seat (8), and the buffer structure (10) is used for buffering the dust shield assembly (6) when the dust shield assembly returns.

4. The high-strength fully enclosed dustproof structure for automotive seat slide rails according to claim 3, wherein the buffer structure (10) comprises a buffer groove (101) arranged on the support seat (8), and a buffer pad (102) is fixedly arranged in the buffer groove (101).

5. The high-strength fully enclosed dustproof structure for automotive seat slide rails according to claim 4, wherein a collecting groove (103) is arranged on one side that is of the buffer pad (102) and that is away from the mounting groove (4), the collecting groove (103) corresponds in position to the flow guide chamber (63) in the dust shield assembly (6) in a supporting state, and the collecting groove (103) is used for collecting impurities flowing out of the flow guide chamber (63).

6. The high-strength fully enclosed dustproof structure for automotive seat slide rails according to claim 1, wherein the return structure (9) comprises a torsion spring (91) arranged between each dust shield in the dust shield assembly (6) and the rotating shaft (5), the torsion spring (91) is arranged on the rotating shaft (5), and one end of the torsion spring (91) is connected to a corresponding dust shield; and
the torsion spring (91) is used for returning the dust shield in the dust shield assembly (6) to the state in which the dust shield abuts against the support seat (8).

7. The high-strength fully enclosed dustproof structure for automotive seat slide rails according to any one of claims 1 to 6, wherein both ends of the shifting plate (7) are provided with guide structures (11), and the guide structures (11) are used for guiding the dust shield in the dust shield assembly (6) to unfold and return.

8. The high-strength fully enclosed dustproof structure for automotive seat slide rails according to claim 7, wherein each of the guide structures (11) comprises a guide plate (111) arranged at one end of the shifting plate (7) and a guide surface (112) arranged on the guide plate (111); and
the guide surface (112) is located at a top of the guide plate (111), the guide surface (112) is inclined from top to bottom in a sliding direction of the guide plate (111), and the guide surface (112) is used for abutting against an inner surface of the dust shield in the dust shield assembly (6).

9. The high-strength fully enclosed dustproof structure for automotive seat slide rails according to claim 8, wherein all bent portions on the guide surface (112) are connected by cambered surface transitions.
